(19) Europäisches Patentamt
European Patent Office
Office européen des brevets

(11) **EP 3 714 286 B1**

(12) **EUROPÄISCHE PATENTSCHRIFT**

(45) Veröffentlichungstag und Bekanntmachung des Hinweises auf die Patenterteilung:
**24.01.2024 Patentblatt 2024/04**

(21) Anmeldenummer: **18811473.0**

(22) Anmeldetag: **21.11.2018**

(51) Internationale Patentklassifikation (IPC):
**G01S 7/41** *(2006.01)* **G01S 13/92** *(2006.01)*
**G08G 1/052** *(2006.01)* **G08G 1/056** *(2006.01)*

(52) Gemeinsame Patentklassifikation (CPC):
**G01S 13/92; G01S 7/41; G08G 1/052; G08G 1/056**

(86) Internationale Anmeldenummer:
**PCT/EP2018/082023**

(87) Internationale Veröffentlichungsnummer:
**WO 2019/101774 (31.05.2019 Gazette 2019/22)**

(54) **VERFAHREN UND VORRICHTUNG ZUR ERMITTLUNG EINES INSTALLATIONSWINKELS ZWISCHEN EINER FAHRBAHN, AUF DER EIN FAHRZEUG FÄHRT, UND EINER ERFASSUNGSRICHTUNG EINES MESS- BZW. RADARSENSORS**

METHOD AND DEVICE FOR ASCERTAINING AN INSTALLATION ANGLE BETWEEN A ROADWAY ON WHICH A VEHICLE TRAVELS AND A DETECTION DIRECTION OF A MEASUREMENT OR RADAR SENSOR

PROCÉDÉ ET DISPOSITIF DE DÉTERMINATION D'UN ANGLE D'INSTALLATION ENTRE UNE PISTE SUR LAQUELLE UN VÉHICULE CIRCULE ET UNE DIRECTION DE MESURE D'UN CAPTEUR DE MESURE OU RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2017 DE 102017221034**

(43) Veröffentlichungstag der Anmeldung:
**30.09.2020 Patentblatt 2020/40**

(73) Patentinhaber: **Jenoptik Robot GmbH**
**40789 Monheim (DE)**

(72) Erfinder:
• **PRÖFROCK, Dima**
**22589 Hamburg (DE)**

• **LEHNING, Michael**
**31137 Hildesheim (DE)**
• **PAPPENDORF, Andre**
**40764 Langenfeld (DE)**

(74) Vertreter: **Waldauf, Alexander**
**Jenoptik AG**
**Carl-Zeiß-Straße 1**
**07743 Jena (DE)**

(56) Entgegenhaltungen:
**EP-A1- 2 607 922      EP-A1- 2 660 624**
**DE-A1-102014 003 152**

**Beschreibung**

Der hier vorgestellte Ansatz betrifft ein Verfahren und eine Vorrichtung zur Ermittlung eines Installationswinkel zwischen einer Fahrbahn, auf der ein Fahrzeug fährt, und einer Erfassungsrichtung eines Mess- bzw. Radarsensors gemäß den Hauptansprüchen.

Um Verkehrsverstöße, insbesondere Verstöße gegen eine Höchstgeschwindigkeit von Fahrzeugen im Straßenverkehr ahnden zu können, sind hochpräzise und damit juristisch verwertbare Messergebnisse erforderlich. Oftmals werden solche Messergebnisse durch Radaranlagen generiert, welche ein Radarsignal aussenden, ein vom zu messenden Fahrzeug reflektiertes Signal als Reflexionssignal empfangen und dieses auswerten. Problematisch ist hierbei jedoch, wenn die Erfassungsrichtung des Radarsensors, genauer gesagt, die Erfassungsrichtung des Radarsensors für das reflektierte Signal in Bezug auf die Bewegungsrichtung des Fahrzeugs auf der Fahrbahn nicht genau bekannt ist, da hierdurch Messfehler auftreten, die gegebenenfalls das Messergebnis juristisch nicht mehr verwertbar machen. Insofern ist es von gro-ßem Interesse, den Installationswinkel zwischen einer Fahrbahn, auf der ein Fahrzeug fährt, und einer Erfassungsrichtung des Radarsensors genau zu kennen, um unter Kenntnis dieses Installationswinkels ein hochgenaues Messergebnis erhalten zu können.

Die EP 2 607 922 A1 offenbart ein Verfahren und eine Anordnung zur Erfassung von Messdaten eines Fahrzeugs in einem Radarfeld. Der Installationswinkel zwischen einer Radarachse und einer Fahrrichtung eines Fahrzeuges wird aus der Fahrtrichtung des Fahrzeuges bestimmt. Die DE 10 2014 003 152 A1 offenbart ein Verfahren und eine Vorrichtung zum Bestimmen zumindest eines Objektparameters eines Verkehrsmittels. Die EP 2 660 624 A1 offenbart ein Verkehrsüberwachungssystem und ein Verfahren zum Überwachen eines Verkehrsstromes.

Vor diesem Hintergrund stellt sich die vorliegende Erfindung zur Aufgabe, eine verbesserte Möglichkeit zur Ermittlung des Installationswinkels zwischen einer Fahrbahn, auf der ein Fahrzeug fährt, und eine Erfassungsrichtung eines Mess- bzw. Radarsensors zu schaffen.

Diese Aufgabe wird durch den Gegenstand der unabhängigen Patentansprüche gelöst.

Vorliegend wird ein nicht erfindungsgemässes Verfahren zur Ermittlung eines Installationswinkels zwischen einer Fahrbahn, auf der ein Fahrzeug fährt, und einer Erfassungsrichtung eines Mess- bzw. Radarsensors vorgestellt, wobei das Verfahren die folgenden Schritte aufweist:

- Einlesen von einer Mehrzahl von Reflektionssignalen, die je ein Reflektionssignal repräsentieren, das von einem von einer Sendeeinheit des Mess- bzw. Radarsensors ausgesandten Mess- bzw. Radarstrahl und an je einem unterschiedlichen Reflektionsabschnitt des Fahrzeugs reflektiert wurde, wobei die Reflektionssignale eine Bewegungsinformation über eine Bewegungsrichtung des Reflektionsabschnitts des Fahrzeugs aufweisen, an dem der Mess- bzw. Radarstrahl reflektiert wurde und/oder wobei die Reflektionssignale eine Positionsinformation aufweisen, die die Position des Reflektionsabschnitts des Fahrzeugs repräsentiert, an dem der Mess- bzw. Radarstrahl reflektiert wurde;

- Detektieren einer Bewegungsrichtungskomponente der durch die Bewegungsinformationen repräsentierten Bewegungsrichtungen der Reflektionsabschnitte des Fahrzeugs aus der Mehrzahl von Reflektionssignalen, bei der alle Reflektionsabschnitte des Fahrzeugs eine gleichartige Bewegung ausführen und/oder einer Bewegungsrichtungskomponente, bei der die durch die Positionsinformationen repräsentierten Positionen der Reflektionsabschnitte des Fahrzeugs unter der Annahme einer Bewegung entsprechend der Bewegungsrichtungskomponente auf einen gleichen Zeitpunkt umgerechnet werden und zu diesem Zeitpunkt in einer zweidimensionalen Darstellung eine Form bilden, die die größte Ähnlichkeit mit einer L-Form aufweist; und

- Bestimmen des Installationswinkels unter Verwendung der detektierten Bewegungsrichtungskomponente.

Unter einer Bewegungsrichtungskomponente kann beispielsweise ein Bewegungsvektor verstanden werden, der eine Komponente, beispielsweise nach einer Vektorzerlegung, der Bewegungsrichtung eines Reflektionsabschnitts des Fahrzeugs entspricht. Unter einer Position der Reflektionsabschnitte des Fahrzeugs kann eine geographische oder relative Position des entsprechenden Reflektionsabschnitts des Fahrzeugs in Bezug zum Mess- bzw. Radarsensor verstanden werden. Unter einer größten Ähnlichkeit kann ein Maß verstanden werden, welches die Abweichung der durch die Positionen der Reflektionsabschnitte zum gleichen Zeitpunkt gebildeten Form von der L-Form charakterisiert. Beispielsweise kann zur Bestimmung der größten Ähnlichkeit eine Standardabweichung der entsprechenden Positionen der Reflektionsabschnitt zum gleichen Zeitpunkt von dem längeren bzw. dem kürzeren Abschnitt der L-Form bestimmt werden.

Der hier vorgestellte Ansatz basiert auf der Erkenntnis, dass die Mehrzahl von Reflektionssignalen dahingehend analysiert wird, dass beispielsweise in mehreren (Iterations-) Zyklen unterschiedliche Bewegungsrichtungskomponenten angenommen werden und die Bewegungsrichtungen der Reflektionsabschnitte des Fahrzeugs unter Verwendung dieser

**EP 3 714 286 B1**

angenommenen Bewegungsrichtungskomponenten zerlegt werden. Hierbei kann dann erkannt werden, dass eine bestimmte der angenommenen Bewegungsrichtungkomponente extrahiert werden kann, die für alle Reflektionsabschnitte des Fahrzeugs gleich ist, sodass diese Bewegungsrichtungkomponente dann beispielsweise als Fahrtrichtung bzw. Fahrtgeschwindigkeit des Fahrzeugs interpretiert werden kann, da alle Reflektionsabschnitte des Fahrzeugs direkt mit dem Fahrzeug verbunden sein müssen und somit eine Bewegung in Richtung der Bewegungsrichtungkomponente aufweisen müssen. In einer nicht erfindungsgemässen Alternative oder zusätzlich kann auch die Bewegungsrichtungkomponente durch ein Zurückrechnen der zu unterschiedlichen Zeitpunkten erhaltenen Reflektionssignale bzw. den darin enthaltenen Positionsinformationen detektiert werden. Hierbei kann ebenfalls ausgenutzt werden, dass für unterschiedliche angenommene Bewegungsrichtungskomponenten bei dem Zurückrechnen der Positionen auf einen gleichen Zeitpunkt diejenige Bewegungsrichtungskomponente am Wahrscheinlichsten ist, bei der eine kleinste Abweichung zwischen einer oder mehreren Komponenten einer L-Form und der zweidimensionalen Darstellung der auf den gleichen Zeitpunkt zurückgerechneten Positionen auftritt. Die L-Form kann hierbei stellvertretend für die Form des Fahrzeugs aus Sicht des Mess- bzw. Radarsensors angenommen werden, bei der die längere Seite (als eine erste Komponente) der L-Form einer Fahrzeuglängsseite und die kürzere Seite (als eine zweite Komponente) der L-Form der Front oder dem Heck des Fahrzeugs entspricht. Wird dagegen eine Bewegungsrichtungkomponente beim Zurückrechnen der Positionen auf den gleichen Zeitpunkt verwendet, die von der tatsächlichen Bewegungsrichtungskomponente der Reflektionsabschnitte des Fahrzeugs deutlich abweicht, wird dies bei dem Zurückrechnen der Positionen auf den gleichen Zeitpunkt zu einer "Verschmierung" der durch die zurückgerechneten Positionen in der zweidimensionalen Darstellung gebildeten Form führen, sodass hieraus erkannt werden kann, dass die Wahl der zugrunde liegenden Bewegungsrichtung Komponente nicht optimal war.

Der hier vorgestellte Ansatz bietet den Vorteil, dass durch technisch sehr einfache Umsetzung aus bereits vorhandenen Signalen die Bewegungsrichtung Komponente des Fahrzeugs detektiert bzw. verifiziert werden kann, sodass die Bestimmung des Installationswinkels beispielsweise mittels bekannten Verfahren unter Verwendung der nun detektierten Bewegungsrichtungskomponente technisch sehr einfach durchgeführt werden kann. Auf diese Weise lässt sich der Aufwand zur Einrichtung eines Mess- bzw. Radarsensors als Messstelle für Verkehrsverstöße einerseits deutlich vereinfachen und weiterhin die Präzision der Messergebnisse deutlich verbessern. Von Vorteil ist eine Ausführungsform des hier vorgeschlagenen Ansatzes, bei der im Schritt des Detektierens die Bewegungsrichtungskomponente unter Verwendung eines Lösungsverfahrens für ein überbestimmtes Gleichungssystem und/oder eine Hough-Transformation detektiert wird. Eine solche Ausführungsform bietet den Vorteil, technisch ausgereifte Verfahren zur Detektion der Bewegungsrichtungkomponente einsetzen zu können.

Gemäß einer nicht erfindungsgemässen Ausführungsform kann im Schritt des Detektierens die größte Ähnlichkeit der Form durch die Bestimmung derjenigen Bewegungsrichtungskomponente detektiert werden, bei der die durch die Positionsinformationen repräsentierten Positionen der Reflektionsabschnitte des Fahrzeugs die kleinste Standardabweichung von einer der Komponenten der L-Form aufweisen. Hierbei kann beispielsweise eine Standardabweichung der auf den gleichen Zeitpunkt zurückgerechneten Positionen der Reflektionsabschnitte des Fahrzeugs in Bezug zu der längeren und/oder kürzeren Seite als Komponente der L-Form bestimmt werden. Eine solche Ausführungsform bietet den Vorteil einer schnellen und präzisen Detektion der Wahrscheinlichsten von mehreren möglichen bzw. angenommenen Bewegungsrichtungskomponenten, die dann als detektierte Bewegungsrichtungskomponente weiterverwendet wird.

Von Vorteil ist ferner eine nicht erfindungsgemässe Ausführungsform des hier vorgeschlagenen Ansatzes, bei der im Schritt des Detektieren Zeitpunkte der Erfassung der durch die Positionsinformationen repräsentierten Positionen der Reflektionsabschnitte des Fahrzeugs in Bezug zu der Bewegungsrichtungskomponente gesetzt werden, um Positionen der Reflektionsabschnitte zu dem gleichen Zeitpunkt zu erhalten. Eine solche nicht erfindungsgemässe Ausführrungsform des hier vorgeschlagenen Ansatzes bietet die Möglichkeit, unterschiedliche angenommene Bewegungsrichtungskomponenten zu verwenden und unter Verwendung der Zeitpunkte, die auch als Zeitstempel betrachtet werden können, eine Position der Reflektionsabschnitte des Fahrzeugs zu einem gleichen Zeitpunkt zu bestimmen. Auf diese Weise lässt sich eine hohe Präzision bei der Erkennung der wahrscheinlichsten Bewegungsrichtungskomponente mit oftmals bereits Verfügung stehenden Reflektionssignalen erreichen.

Gemäß einer weiteren Ausführungsform des hier vorgestellten Ansatzes können im Schritt des Detektierens die durch die Bewegungsinformationen repräsentierten Bewegungsrichtungen der Reflektionabschnitte als Radialgeschwindigkeitsvektoren der Reflektionsabschnitte des Fahrzeugs verarbeitet oder interpretiert werden, um die Bewegungsrichtungskomponente zu detektieren. Unter einem Radialgeschwindigkeitsvektor kann hierbei ein Geschwindigkeitsvektor in Erfassungsrichtung des Mess- bzw. Radarsensors verstanden werden. Eine solche Ausführungsform des hier vorgeschlagenen Ansatzes bietet den Vorteil, die Signale des Mess- bzw. Radarsensors als Reflektionssignale ohne großen Informationsverlust weiterverarbeiten zu können.

Besonders sicher und zuverlässig ist eine Ausführungsform des hier vorgeschlagenen Ansatzes, bei der ferner ein Schritt eines Nachverfolgens des Fahrzeugs erfolgt, insbesondere wobei der Installationswinkel ferner unter Verwendung einer Information über das nachverfolgte Fahrzeug iterativ bestimmt wird. Eine solche Ausführungsform bietet

3

den Vorteil, eine einfache Verifikationsmöglichkeit für den bestimmten Installationswinkel durch einen einfach auszuführenden Einlern- bzw. Nachlernvorgang bereitzustellen, sodass die entsprechend erhaltenen Messergebnisse einer solchen Signalverarbeitung als sehr zuverlässig betrachtet werden können.

Günstig ist weiterhin eine Ausführungsform des hier vorgeschlagenen Ansatzes, bei der ferner ein Schritt des statistischen Erfassens der Auftrittswahrscheinlichkeit von Positionen der Reflektionabschnitte erfolgt, um die Fahrspur des Fahrzeugs zu erhalten, wobei der Installationswinkel unter Verwendung der erhaltenen Fahrspur ermittelt wird. Auch durch eine solche Ausführungsform lässt sich eine Verifikationsmöglichkeit für den bestimmten Installationswinkel schaffen, sodass ebenfalls die erhaltenen Messergebnisse einer solchen Signalverarbeitung als sehr zuverlässig betrachten werden können.

Ferner schaffte der hier vorgestellte Ansatz ein Verfahren zur Erfassung einer Geschwindigkeit eines Fahrzeugs, wobei das Verfahren die folgenden Schritte aufweist:

- Ermitteln eines Installationswinkels zwischen der Fahrbahn, auf der das Fahrzeug fährt, und der Erfassungsrichtung des Mess- bzw. Radarsensors gemäß einer hier vorgestellten nicht erfindungsgemässen Variante; und
- Erfassen einer Geschwindigkeit des Fahrzeugs unter Verwendung des ermittelten Installationswinkels.

Durch eine solche Ausführungsform des hier vorgeschlagenen Ansatzes lässt sich vorteilhaft die Geschwindigkeit des Fahrzeugs mit hoher Messgenauigkeit erfassen, sodass eine derart erfasste Geschwindigkeit den Anforderungen einer juristischen Verwertbarkeit dieser Messergebnisse entsprechend.

Der hier vorgestellte Ansatz schafft ferner eine Vorrichtung, die ausgebildet ist, um die Schritte einer nicht erfindungsgemässen Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes werden unter Bezugnahme auf die nachfolgenden Figuren näher erläutert, wobei eine wiederholte Beschreibung von gleichen oder ähnlichen Elementen in den unterschiedlichen Figuren vermieden wird, wobei diese Elemente durch gleiche oder ähnliche Bezugszeichen bezeichnet sind. Bei dem Einsatz eines Mess- bzw. Radarsensors kann es sich insbesondere auch um optische Sensoren wie Laser- bzw. Lichtsensoren unterschiedlichster Frequenzen und Bandbreiten handeln, welche aus Gründen der Übersicht und Lesbarkeit abschließend nicht aufgezählt werden sollen. Beispielhaft und besonders bevorzugt soll die Funktionsweise anhand des Radarsensors dargestellt werden. Es zeigen:

Fig. 1     eine schematische Draufsicht auf ein Szenario, bei dem eine Messung einer Geschwindigkeit eines Fahrzeugs mittels eines Radarsensors unter Verwendung einer Vorrichtung gemäß einem Ausführungsbeispiel erfolgt;

Fig. 2     zwei Diagramme zur Darstellung der Detektion der optimalen Bewegungsrichtungskomponente;

Fig. 3     ein Diagramm zur Darstellung einer Reflektionsstatistik zur Bestimmung der Positionen der Reflektionsabschnitte in Bezug zum Radarsensor;

Fig. 4    Darstellungen zur Erläuterung einer Erfassung der Bewegungsrichtungskomponente durch die Auswertung von Objektkonturen; und

Fig. 5    ein Ablaufdiagramm eines Verfahrens gemäß einem Ausführungsbeispiel.

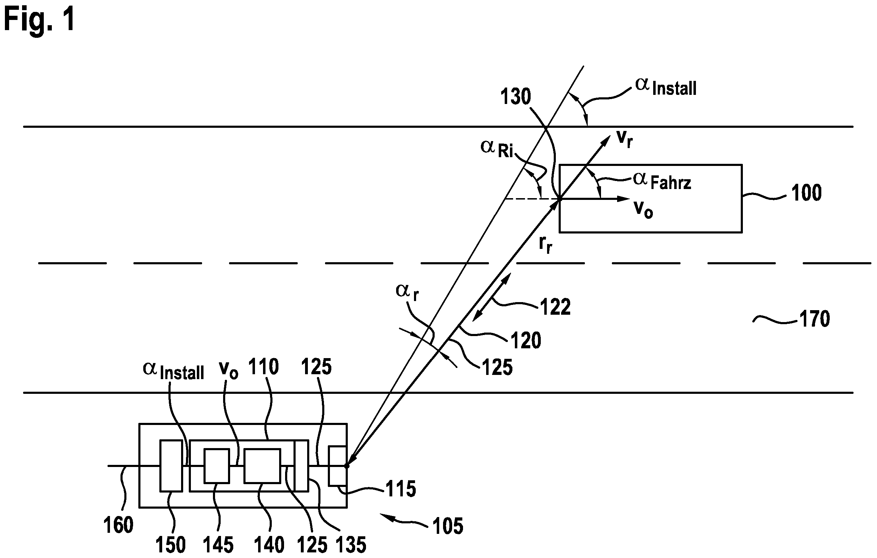

Figur 1 zeigt eine schematische Draufsicht auf ein Szenario, die eine Messung der Geschwindigkeit eines Fahrzeugs 100 mittels eines Radarsensors 105 unter Verwendung einer Vorrichtung 110 gemäß einem Ausführungsbeispiel erfolgen. Der Radarsensor 105 umfasst hierbei ein Sende- und Empfangsmodul 115 zum Aussenden von einer Mehrzahl von Radarstrahlen 120 in eine Aussende- (bzw. aufgrund der kurzen Laufzeit der Radarstrahlen 120) bzw. Erfassungsrichtung 122 und zum Empfangen von Reflektionssignalen 125 aus der Erfassungsrichtung 122, wobei die Reflektionssignale 125 je einem an einem Reflektionsabschnitt 130 des Fahrzeugs 100 reflektierten Radarsignal 120 entsprechen. Zur Verbesserung der Übersichtlichkeit ist in der Figur 1 lediglich die Aussendung und der Empfang eines einzelnen Radarsignals 120 und des entsprechenden Reflektionssignals 125 dargestellt, wobei die Darstellung selbstredend auch die Verhältnisse für die Aussendung von mehreren Radarsignalen 120 und den Empfang und von mehreren Reflektionssignalen 125 beschreibt. Aus dem Sende- und Empfangsmodul 115 werden die Reflektionssignale 125 über eine Einleseschnittstelle 135 in die Vorrichtung 110 zur Ermittlung eines Installationswinkels $\alpha_{\text{Install}}$ zwischen einer Fahrbahn, auf der ein Fahrzeug 100 fährt, und einer Erfassungsrichtung 122 eingelesen und an eine Einrichtung 140 zum Detektieren der Bewegungsrichtungskomponente $v_0$ übertragen. In der Einrichtung 140 zum Detektieren der Bewegungsrichtungskomponente $v_0$ wird dann in einer nachfolgend noch näher beschriebenen Vorgehensweise aus den Reflektionssignalen die Bewegungsrichtungskompoente $v_0$ bestimmt und an eine Einrichtung 145 zum Bestimmen des Installationswinkels $\alpha_{\text{Install}}$ weitergegeben.

Der auf diese Weise ermittelte Installationswinkel $\alpha_{\text{Install}}$ kann nun beispielsweise in einer Vorrichtung 150 zur Erfassung einer Geschwindigkeit des Fahrzeugs 100 weiterverarbeitet werden, in welcher ein der Geschwindigkeit des Fahrzeugs 100 entsprechender Messwert 160 ermittelt wird, der dann mit hoher Genauigkeit der Geschwindigkeit des Fahrzeugs 100 entspricht und somit in einer juristisch verwertbaren Weise zur Überwachung des Verkehrsgeschehens verwendet werden kann.

Um nun die Bestimmung des Installationswinkels $\alpha_{\text{Install}}$ vornehmen zu können, ist es erforderlich, einerseits die Bewegung des Fahrzeugs 100 mit der Bewegungsrichtungskomponente $v_0$ zu ermitteln, da sich alle Reflektionsabschnitte 130 des Fahrzeugs 100 mit einer gleichen Bewegungsrichtungskomponente $v_0$ bewegen und andererseits auch die Richtung des Reflektionsabschnitts 130 zum Radarsensor 105 (d. h. die Richtung, aus der das Reflektionssignal 125 erhalten wird) bewegen und die Position des Reflektionsabschnitts 130 in Bezug zum Radarsensor 105 zu kennen. Ferner kann auch noch ein Winkel $\alpha_{\text{Fahrz}}$ zwischen einer Bewegungsrichtung des Fahrzeugs 100 auf einer Fahrbahn 170 und der Erfassungsrichtung 122 berücksichtigt werden. Hierdurch ist es dann beispielsweise möglich, für Reflektionssignale 125, die zu unterschiedlichen Zeitpunkten aufgenommen und mit entsprechenden Zeitstempel bzw. Zeitinformationen versehen wurden, eine entsprechende Zurückrechnung der Position der Reflektionsabschnitte 130 zu einem gleichen bzw. identischen Zeitpunkt vornehmen zu können. Auf diese Weise wird es möglich, auch Reflektionssignale 125, die über einen längeren Zeitraum erstreckt aufgenommen wurden, zu verwenden, und hierdurch eine möglichst hohe Präzision eines erhaltenen Messergebnisses zu erhalten.

Denkbar ist weiterhin, dass die Positionen der Reflektionsabschnitte 130 in Bezug zum Radarsensor 105, genauer der Sende- und Empfangseinheit 115 erfasst und als entsprechende Positionsinformationen im Reflektionssignal 125 enthalten sind. Hierdurch können beispielsweise die Positionen der Reflektionsabschnitte 130 des Fahrzeugs 100 (beispielsweise unter Verwendung des Abstandes $r_r$ aus Figur 1) verändert werden, wobei in diesem Fall auch eine Geschwindigkeitskomponente $v_r$ des Fahrzeugs 100 in Richtung der Erfassungsrichtung 122 gemessen wird, die einer Radialgeschwindigkeit aus Sicht des Radarsensors 105 entspricht. Für ein sehr präzises Messergebnis kann auch noch ein Winkel $\alpha_{\text{Ri}}$ berücksichtigt werden, der zwischen dem Installationswinkel $\alpha_{\text{Install}}$ und der Richtung der Bewegungsrichtungskomponente $v_0$ gemessen wird, sodass auch noch die Abweichung der tatsächlichen Bewegung des Fahrzeugs 100 von einer Ausrichtung der Fahrbahn 170 erfasst werden kann, wobei diese Abweichung im Vergleich zu anderen Winkeln meist nicht besonders groß ist. Die Bewegungsrichtungskomponente $v_0$ kann hierbei näherungsweise unter Verwendung der in der Figur 1 angegebenen Größen wie folgt berechnet werden:

$$v_o = \frac{v_r}{\cos(\alpha_{\text{Fahrz}})} = \frac{v_r}{\cos(\alpha_{\text{Ri}} + \alpha_r)} \approx \frac{v_r}{\cos(\alpha_{\text{Install}} + \alpha_r)}$$

Ist nun die Bewegungsrichtungskomponente $v_0$ bekannt, kann die vorstehende Gleichung beispielsweise bezüglich des Installationswinkels $\alpha_{\text{Install}}$ aufgelöst werden, um hierdurch diesen Wert für den Installationswinkel $\alpha_{\text{Install}}$ zu erhalten.

Nachfolgend wird eine genauere Beschreibung der Vorgehensweise zur Ermittlung der Messwerte vorgestellt, wobei als Radarsensor 105 hier beispielsweise ein Trackingradarsystem, insbesondere als ein FSK-Radar eingesetzt wurde. Es kann die Position in x-y-Koordinaten (bzw. Polarkoordinaten) und die relative Geschwindigkeit $v_r$ einzelner Reflektoren bzw. Reflektionsabschnitte 130 bestimmen. Die relative Geschwindigkeit $v_r$ ist die Geschwindigkeit eines Reflektors bzw. Reflektionsabschnitts 130 in Relation zum Radarsensor 105. Die getrackten Objekte (hier die Fahrzeuge 100) des Radarsensors 105 werden zur Erfassung von Verkehrsverstößen eingesetzt. Hierfür werden unter anderem beispielsweise Position, Geschwindigkeit, Größe und Bewegungsrichtung der Objekte bzw. Fahrzeuge 100 benötigt. Insbesondere für die Erfassung der genauen Geschwindigkeit $v_o$ als Bewegungsrichtungskomponente zur Ahndung von Geschwindigkeitsverstößen ist die Bewegungsrichtung $\alpha_{Ri}$ eines Objektes wie dem Fahrzeug 100 in Relation zum Radarsensor 105 eine wichtige Größe, wie dies in der Figur 1 näher dargestellt ist.

Die Bewegungsrichtung bzw. Bewegungsrichtungskomponente $v_0$ eines einzelnen Objektes wie dem Fahrzeug 100 in die Bewegungsrichtung $\alpha_{Ri}$ wird beispielsweise mittels Tracking bestimmt. Unter Zuhilfenahme des Installationswinkels (auch als Eindrehwinkel bezeichnet) $\alpha_{Install}$ können Tracks mit einer annähernd korrekten Bewegungsrichtung initialisiert werden. Dadurch kann die tatsächliche Bewegungsrichtung bzw. Bewegungsrichtungskomponente $v_0$ ausreichend schnell bzw. auch auf kurzen Strecken erfasst werden, um für Geschwindigkeitsverstöße Objektgeschwindigkeiten $v_0$ mit einer ausreichenden Genauigkeit zu ermitteln.

Das heißt, für das aktuelle Trackingradar ist eine genaue Kenntnis des Installationswinkels $\alpha_{Install}$ notwendig, um Verkehrsverstöße mit einer ausreichenden Geschwindigkeitsgenauigkeit zu erfassen. Ein gängiger Weg den Installationswinkel $\alpha_{Install}$ zu bestimmen, ist die Justierung des Gehäuses des Radarsensors 105 zur Straße bzw. Fahrbahn 170. Dabei können verschiedene Hilfsmittel (Winkeldreieck, Laser-Entfernungsmesser, bildgebende Sensoren (Kameras) mit bekannter Relation zum Radar, etc.) verwendet werden. Je nach technischem Aufbau des Gesamtmesssystems kann dieser Ansatz ungenau, schwierig oder nicht lösbar sein. Wird das Radar z. B. in einem externen Gehäuse verbaut, besteht nur noch die Möglichkeit das externe Gehäuse zur Straße bzw. Fahrbahn 170 auszurichten. Hier ist der Installationswinkel $\alpha_{Install}$ von der Genauigkeit und Stabilität der Konstruktion abhängig. Wird das Radar oder das Gehäuse an unzugänglichen Stellen installiert (z. B. sehr hoch) ist eine Kalibrierung des mechanischen Aufbaus zur Straße 170 kaum möglich.

Eine Alternative zur Kalibrierung zwischen mechanischem Aufbau und Straße 170 ist die Verwendung der vom Radarsensor 105 gelieferten Informationen. So werden z. B. im FS3-Learning-Tool die vom Radarsensor 105 gelieferten Tracks hinsichtlich ihrer Bewegungsrichtung analysiert, um daraus den Installationswinkel $\alpha_{Install}$ abzuleiten. Weil vom Radarsensor 105 aufgrund der beschränkten Bandbreite nur ein Bruchteil der Informationen geliefert werden und die vom Radar bzw. Radarsensor 105 gelieferten Tracks fehlerbehaftet sein können, liefert dieser Ansatz in bestimmten Szenarien keine ausreichend hohe Genauigkeit zur Bestimmung des Installationswinkels $\alpha_{Install}$.

Ist es schwierig oder nicht möglich das Radar 105 über das Gehäuse einzurichten, wird die Verwendung einer Selbsteinrichtung des Radars (bzw. synonym Radarsensors 105) vorgeschlagen. Hierfür nutzt das Radar 105 interne Informationen, um die durchschnittliche Bewegungsrichtung $v_0$ von Fahrzeugen wie dem in der Figur 1 beispielhaft dargestellten Fahrzeug 100, und damit den Installationswinkel $\alpha_{Install}$, zu lernen. Hierfür können verschiedene unabhängige Informationen bzw. Vorgehensweisen genutzt werden:

Nicht erfindungsgemässe Variante 1: Erfassen des Installationswinkels $\alpha_{Install}$ durch Tracking

Sich bewegende Objekte wie das Fahrzeug 100 werden mit einem initialen Winkel $\alpha_{Install}$ (z. B. 0°) initialisiert. Durch Tracken der Objekte 100 kann der Verlauf der Bewegung (Bewegungsrichtung bzw. Bewegungsrichtungskomponente $v_0$) bestimmt werden und ein Differenzwinkel zu dem initialen Winkel für den Installationswinkel $\alpha_{Install}$ bestimmt werden. Der initiale Winkel $\alpha_{Install}$ kann um die Differenz korrigiert werden. Durch Wiederholung des Vorganges kann sich so der ursprüngliche initiale Installationswinkel $\alpha_{Install}$ dem tatsächlichen Installationswinkel $\alpha_{Install}$ immer weiter annähern.

Erfindungsgemässe Variante 2: Erfassen des Installationswinkels $\alpha_{Install}$ durch die Objektgeschwindigkeit als Bewegungsrichtungskomponente $v_0$

Es wird von der Annahme ausgegangen, dass sich alle Reflektionsabschnitte 130 (synonym auch Reflektoren) eines Fahrzeuges 100 mit derselben Geschwindigkeit und derselben Richtung vorwärtsbewegen. Durch den unterschiedlichen Betrachtungswinkel $\alpha_{Fahrz}$ der Reflektoren 130 sind die gemessenen Radialgeschwindigkeiten $v_r$ der Reflektoren 130 verschieden. Unter der obigen Annahme kann eine gemeinsame Bewegungsrichtung als Bewegungsrichtungskomponente $v_0$ ermittelt werden, bei der alle Reflektoren 130 dieselbe Geschwindigkeit haben. Diese Bewegungsrichtungskomponente $v_0$ entspricht dem Installationswinkel $\alpha_{Install}$. Die Lösung des Problems (d. h., das Auffinden der optimalen Bewegungsrichtungskomponente $v_0$) kann mit verschiedensten Methoden erfolgen. Es bietet sich z. B. die Lösung eines überbestimmten Gleichungssystems oder eine Hough-Transformation an.

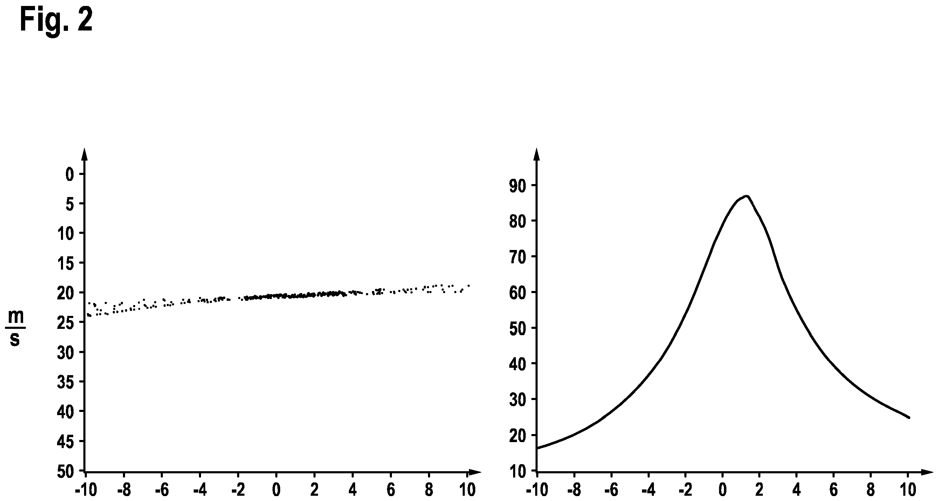

Figur 2 zeigt zwei Diagramme zur Darstellung der Detektion der optimalen Bewegungsrichtungskomponente $v_0$. Hierbei wird im linken Diagramm auf der Abszisse eine hypothetische Bewegungsrichtung bzw. Bewegungsrich-

tungskomponente $v_0$ dargestellt, die innerhalb eines Toleranzbereichs von beispielsweise 10 m/s um einen Referenzwert 0, der auf der Abszisse mittig angeordnet ist) abweicht. Auf der Ordinate des linken Diagramms ist die hypothetische Fahrzeuggeschwindigkeit im m/s aufgetragen.

In dem rechten Teildiagramm aus der Figur 2 ist eine Akkumulationsamplitude dargestellt, die angibt, wie viele Messwerte der Mehrzahl von Messwerten des Radarsensors 105 (aufgetragen auf der Ordinate) für die jeweilige hypothetische Bewegungsrichtungskomponente $v_0$ (aufgetragen auf der Abszisse) erhalten wurden. Aus dem rechten Diagramm der Figur 2 ist hierbei erkennbar, dass die größte Anzahl von Messwerten bei einer hypothetischen Bewegungsrichtungskomponente $v_0$ an einem Wert knapp rechts neben dem Referenzwert auftritt. Dies korreliert auch mit einem Ergebnis aus dem linken Diagramm, aus dem ebenfalls erkennbar ist, dass die höchste Häufigkeit bei einem Wert von knapp rechts neben dem Referenzwert auftritt, und zwar auch bei einer hypothetischen Fahrzeuggeschwindigkeit von 20 m/s, die dann auch als Wert der Bewegungsrichtungskomponente $v_0$ detektiert wird.

Nicht erfindungsgemässe Variante 3: Erfassung des (Installations-)Winkels $\alpha_{Install}$ durch Reflexionsstatistiken

Durch Akkumulation der Rohziele bzw. der als Positionsinformationen erfassten Positionen der Reflektionsabschnitte 130 in einer 2D-Karte kann die Auftrittswahrscheinlichkeit von Positionen der Rohziele als der Reflektionsabschnitte 130 in der Welt bestimmt werden.

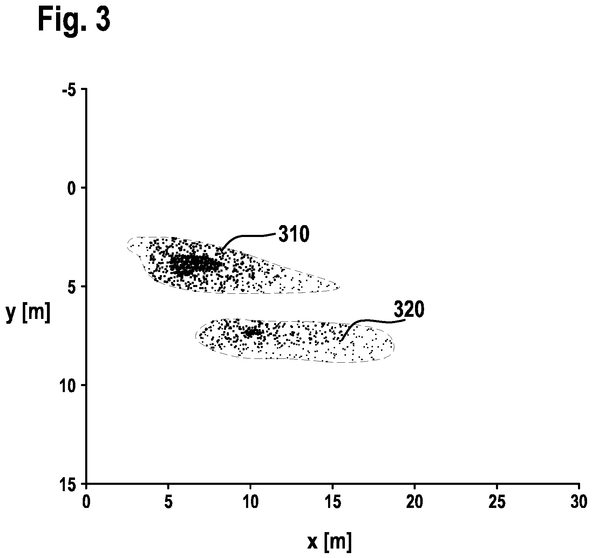

Figur 3 zeigt ein Diagramm zur Darstellung einer Reflektionsstatistik zur Bestimmung der Positionen der Reflektionsabschnitte 130 in Bezug zum Radarsensor 105. Hierbei ist auf der Abszisse eine Koordinate der relativen Position des Reflektionsabschnitts 130 in x-Richtung bezüglich des Radarsensors 105 und auf der Ordinate eine Koordinate der relativen Position des Reflektionsabschnitts 130 in y-Richtung bezüglich des Radarsensors 105 aufgetragen. Es ist wiederum erkennbar, dass in dem Diagramm zwei Punktwolken 310 und 320 auftreten, die diejenigen Positionen repräsentieren, an denen viele Reflektionsabschnitte 130 des Fahrzeugs 100 erkannt wurden. Hieraus lassen sich die Fahrspuren und deren Verlauf und damit der Installationswinkel $\alpha_{Install}$ ableiten.

Nicht erfindungsgemässe Variante 4: Erfassen des (Installations-)Winkels $\alpha_{Install}$ durch Objektkonturen

Bei der Vorbeifahrt eines Fahrzeuges 100 am Radar 105 sind typischerweise Teile der Fahrzeugseite und der Fahrzeugfront/-heck sichtbar. Es kann die ermittelte Fahrzeuggeschwindigkeit $v_0$ verwenden werden; um alle gemessenen Reflexionen auf einen Zeitpunkt zu projizieren.

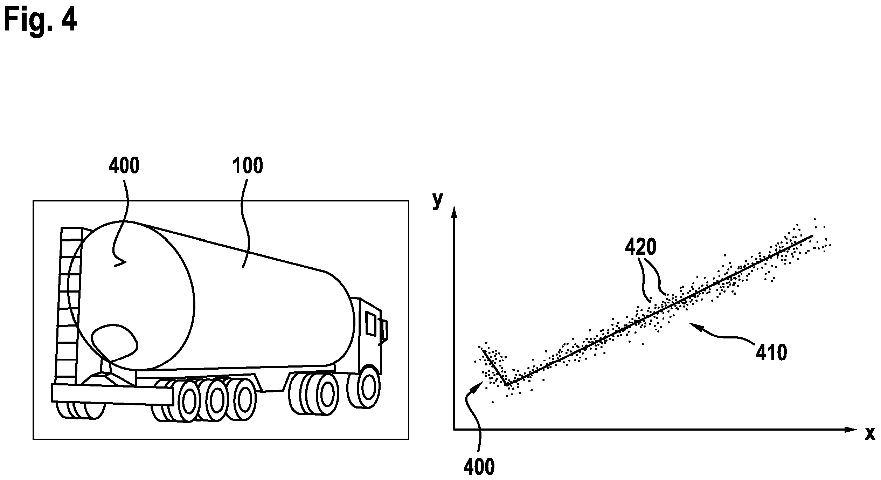

Fig. 4 zeigt Darstellungen zur Erläuterung einer Erfassung der Bewegungsrichtungskomponente $v_0$ durch Auswertung von Objektkonturen. Hierbei ist in einer linken Darstellung ein Bild eines LKWs als Fahrzeug 100 gezeigt, wie das Fahrzeug von hinten aus erscheint. Zu erkennen sind somit die Längsseite als längere Seite des Fahrzeugs 100 als LKW und die Heckseite des LKWs 400 als kürzere Seite. Werden nun vom Radarsensor 105 Radarstrahlen 120 auf das Fahrzeug 100 abgestrahlt und die von den unterschiedlichen Reflektionsabschnitten 130 zurückreflektierten Reflektionssignale 125 hinsichtlich der Positionen ausgewertet, an denen die Reflektionsabschnitte 130 sich relativ zum Radarsensor 105 befinden, dann kann bei einer zweidimensionalen Darstellung eine Form der durch die Reflektionssignale 125 repräsentierten Positionen 420 erhalten werden, die einer L-Form 410 gemäß dem rechten Diagramm der Figur 4 entspricht. Das Ergebnis einer solchen Darstellung der Positionen 420 der Reflektionsabschnitte 130 ist somit eine typische L-Form 410 (Front/Heck und Seite). Je nachdem welche Bewegungsrichtungskomponente $v_0$ des Fahrzeuges 100 angenommen wird, ist die L-Form 410 scharf oder diffus ausgeprägt. Es kann somit die Bewegungsrichtungskomponente $v_0$ des Objektes bzw. Fahrzeugs 100 und damit den Installationswinkel $\alpha_{Install}$ bestimmen, indem man den optimalen Winkel auswählt bei dem die Projektion bzw. die durch die zweidimensionale Abbildung der Positionen der Reflektionsabschnitte 130 möglichst scharf ausgeprägt ist, sodass diese durch die Projektion erhaltene Form die größte Ähnlichkeit bzw. die kleinste Abweichung von der L-Form aufweist. Mathematisch kann eine solche größte Ähnlichkeit bzw. kleinste Abweichung beispielsweise dadurch bestimmt werden, dass für diese Bewegungsrichtungskomponente $v_0$ eine möglichst kleine Standardabweichung des Seitenanteils und des Front/Heckanteils der projizierten Positionen in Bezug zu Komponenten wie dem längeren oder kürzeren Balken des L der L-Form vorliegt.

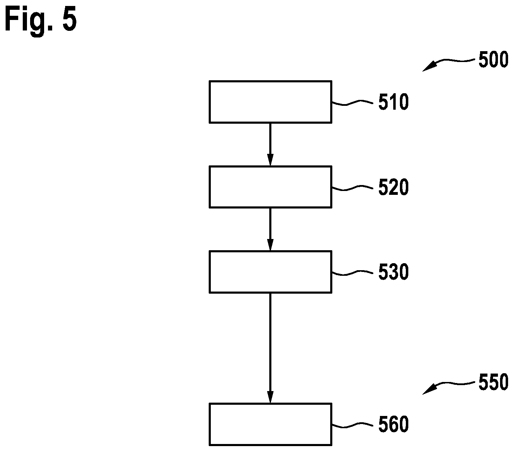

Für das Lernen des Installationswinkels $\alpha_{Install}$ kann eine der vorgeschlagenen Methoden oder die Kombination mehrerer Methoden verwendet werden. Zur Erhöhung der Stabilität der Bestimmung des Installationswinkels $\alpha_{Install}$ kann die Bewegungsrichtungskomponente $v_0$ mehrerer Fahrzeuge 100 erfasst und kombiniert werden. Auf diese Weise kann die Auswertung der Reflektionssignale 125 für mehrere Reflektionsabschnitte 130 an mehreren Fahrzeugen 100 zu einer Erhöhung der Präzision der von dem Radarsensor 105 im folgenden Messbetrieb erhaltenen Messwerte führen. Figur 5 zeigt ein Ablaufdiagramm eines Verfahrens 500 zum Bestimmen des Installationswinkels $\alpha_{Install}$ zwischen einer Fahrbahn, auf der ein Fahrzeug fährt, und einer Erfassungsrichtung eines Radarsensors. Das Verfahren 500 umfasst einen Schritt 510 des Einlesens, einen Schritt 520 des Detektierens und einen Schritt 530 des Bestimmens. Im Schritt 510 des Einlesens wird eine Mehrzahl von Reflektionssignalen eingelesen, die je ein Reflektionssignal repräsentieren, das von einem von einer Sendeeinheit des Radarsensors ausgesandten Radarstrahl und an je einem unterschiedlichen Reflektionsabschnitt des Fahrzeugs reflektiert wurde, wobei die Reflektionssignale eine Bewegungsinformation über eine Bewegungsrichtung des Reflektionsabschnitts des Fahrzeugs aufweisen, an dem der Radarstrahl reflektiert wurde und/oder wobei die Reflektionssignale eine Positionsinformation aufweisen, die die Position des Reflektionsabschnitts des Fahrzeugs repräsentiert, an dem der Radarstrahl reflektiert wurde. Im Schritt 520 des Detektierens wird eine Bewegungsrichtungskomponente der durch die Bewegungsinformationen repräsentierten Bewegungsrichtungen der Reflektionsabschnitte des Fahrzeugs aus der Mehrzahl von Reflektionssignalen detektiert, bei der alle Reflektionsabschnitte des Fahrzeugs eine gleichartige Bewegung ausführen. Alternativ zum erfindungsgemässen Ausführungsbeispiel oder zusätzlich kann eine Bewegungsrichtungskomponente detektiert werden, bei der durch die Positionsinformationen repräsentierten Positionen der Reflektionsabschnitte des Fahrzeugs unter der Annahme der Bewegung entsprechend der Bewegungsrichtungskomponente auf einen gleichen Zeitpunkt abgebildet werden und zu diesem Zeitpunkt in einer zweidimensionalen Darstellung eine Form bilden, die die größte Ähnlichkeit mit einer L-Form aufweist. Im Schritt 530 des Bestimmens wird der Installationswinkel unter Verwendung der detektierten Bewegungsrichtungskomponente bestimmt.

Ferner zeigt Figur 5 ein Verfahren 550 zur Erfassung einer Geschwindigkeit des Fahrzeugs 100, wobei das Verfahren 550 die Schritte des Verfahrens 500 und einen Schritt 560 des Erfassens der Geschwindigkeit des Fahrzeugs 100 unter Verwendung des ermittelten Installationswinkels $\alpha_{\text{Install}}$ aufweist.

**Patentansprüche**

1. Verfahren (500) zur Ermittlung eines Installationswinkel ($\alpha_{\text{Install}}$) zwischen einer Fahrbahn (170), auf der ein Fahrzeug (100) fährt, und einer Erfassungsrichtung (122) eines Mess- bzw. Radarsensors (105), wobei das Verfahren (500) die folgenden Schritte aufweist:

   - Einlesen (510) von einer Mehrzahl von Reflexionssignalen (125), die je ein Reflexionssignal (125) repräsentieren, das von einem von einer Sendeeinheit (115) des Mess- bzw. Radarsensors (105) ausgesandten Mess- bzw. Radarstrahl (120) und an je einem unterschiedlichen Reflexionsabschnitt (130) des Fahrzeugs (100) reflektiert wurde, wobei die Reflexionssignale (125) eine Bewegungsinformation über eine Bewegungsrichtung des Reflexionsabschnitts (130) des Fahrzeugs (100) enthalten, an dem der Mess- bzw. Radarstrahl (120) reflektiert wurde, wobei die Reflexionssignale (125) eine Positionsinformation enthalten, die die Position (420) des Reflexionsabschnitts (130) des Fahrzeugs (100) repräsentiert, an dem der Mess- bzw. Radarstrahl (120) reflektiert wurde;
   - Detektieren (520) einer Bewegungsrichtungskomponente ($v_0$) der durch die Bewegungsinformationen repräsentierten Bewegungsrichtungen der Reflexionsabschnitte (130) des Fahrzeugs (100) aus der Mehrzahl von Reflexionssignalen (125),wobei durch die unterschiedlichen Betrachtungswinkel der Reflexionsabschnitte die gemessenen Radialgeschwindigkeiten verschieden sind und unter der Annahme, dass sich alle Reflexionsabschnitte des Fahrzeugs mit derselben Geschwindigkeit und derselben Richtung vorwärtsbewegen, daraus eine gemeinsame Bewegungsrichtung als die Bewegungsrichtungskomponente ermittelt wird; und
   - Bestimmen (530) des Installationswinkels ($\alpha_{\text{Install}}$) unter Verwendung der detektierten Bewegungsrichtungskomponente ($v_0$).

2. Verfahren (500) gemäß Anspruch 1, bei dem im Schritt des Detektierens (520) die Bewegungsrichtungskomponente ($v_0$) unter Verwendung eines Lösungsverfahrens für ein überbestimmtes Gleichungssystem und/oder eine Hough-Transformation detektiert wird.

3. Verfahren (500) gemäß einem der vorangegangenen Ansprüche, bei dem im Schritt des Detektierens (520) die durch die Bewegungsinformationen repräsentierten Bewegungsrichtungen der Reflexionsabschnitte (130) als Radialgeschwindigkeitsvektoren ($v_r$) der Reflexionsabschnitte (130) des Fahrzeugs (100) verarbeitet oder interpretiert werden, um die Bewegungsrichtungskomponente ($v_0$) zu detektieren.

4. Verfahren (500) gemäß einem der vorangegangenen Ansprüche, bei dem ferner ein Schritt eines Nachverfolgens des Fahrzeugs (100) erfolgt, insbesondere wobei der Installationswinkel ($\alpha_{\text{Install}}$) ferner unter Verwendung einer Information über das nachverfolgte Fahrzeug (100) iterativ bestimmt wird.

5. Verfahren (500) gemäß einem der vorangegangenen Ansprüche, bei dem ferner ein Schritt des statistischen Erfassens der Auftrittswahrscheinlichkeit von Positionen der Reflexionsabschnitte (130) erfolgt, um die Fahrspur (170) des Fahrzeugs (100) zu erhalten, wobei der Installationswinkel ($\alpha_{\text{Install}}$) unter Verwendung der erhaltenen Fahrspur (170) ermittelt wird.

6. Verfahren (550) zur Erfassung einer Geschwindigkeit eines Fahrzeugs (100), wobei das Verfahren die folgenden Schritte aufweist:

- Ermitteln eines Installationswinkels ($\alpha_{Install}$) zwischen der Fahrbahn (170), auf der das Fahrzeug (100) fährt, und der Erfassungsrichtung (122) des Mess- bzw. Radarsensors (105) gemäß einem Verfahren (500) der vorangegangenen Ansprüche; und
- Erfassen (560) einer Geschwindigkeit des Fahrzeugs (100) unter Verwendung des ermittelten Installationswinkels ($\alpha_{Install}$).

7. Vorrichtung (110) mit Einrichtungen (135, 140, 145, 150) umfassend eine Erfassungseinrichtung eines Mess- bzw. Radarsensors, die ausgebildet ist, um die Schritte eines Verfahrens (500, 550) gemäß einem der vorangegangenen Ansprüche auszuführen, umzusetzen und/oder anzusteuern.

8. Computerprogramm mit Programmcode, der ausgebildet ist, um die Schritte des Verfahrens (500, 550) gemäß einem der Ansprüche 1 bis 5 in einer Vorrichtung nach Anspruch 7 anzusteuern, auszuführen und/oder umzusetzen.

9. Maschinenlesbares Speichermedium, auf dem ein Computerprogramm gemäß Anspruch 8 gespeichert ist.

**Claims**

1. Method (500) for ascertaining an installation angle ($\alpha_{Install}$) between a roadway (170) on which a vehicle (100) travels and a detection direction (122) of a measurement or radar sensor (105), wherein the method (500) comprises the following steps:

- reading (510) a plurality of reflection signals (125) which each represent a reflection signal (125) which has been reflected from a measurement or radar beam (120) emitted by a transmitting unit (115) of the measurement or radar sensor (105) and has been reflected on a different reflection portion (130) of the vehicle (100), wherein the reflection signals (125) contain movement information regarding a movement direction of the reflection portion (130) of the vehicle (100) on which the measurement or radar beam (120) has been reflected, wherein the reflection signals (125) contain position information which represents the position (420) of the reflection portion (130) of the vehicle (100) on which the measuring or radar beam (120) has been reflected;
- detecting (520) a movement direction component ($v_0$) of the movement directions of the reflection portions (130) of the vehicle (100) represented by the movement information from the plurality of reflection signals (125), wherein the measured radial velocities are different due to the different viewing angles of the reflection portions and, assuming that all reflection portions of the vehicle move forward at the same velocity and in the same direction, a common movement direction is ascertained therefrom as the movement direction component; and
- determining (530) the installation angle ($\alpha_{Install}$) using the detected movement direction component ($v_0$).

2. Method (500) according to claim 1, wherein, in the step of detecting (520), the movement direction component ($v_0$) is detected using a solution method for an overdetermined equation system and/or a Hough transform.

3. Method (500) according to either of the preceding claims, wherein, in the step of detecting (520), the movement directions of the reflection portions (130) represented by the movement information are processed or interpreted as radial velocity vectors ($v_r$) of the reflection portions (130) of the vehicle (100) in order to detect the movement direction component ($v_0$).

4. Method (500) according to any of the preceding claims, wherein a step of tracking the vehicle (100) also takes place, in particular wherein the installation angle ($\alpha_{Install}$) is further iteratively determined using information regarding the tracked vehicle (100).

5. Method (500) according to any of the preceding claims, wherein a step of statistically detecting the occurrence probability of positions of the reflection portions (130) also takes place in order to obtain the lane (170) of the vehicle (100), wherein the installation angle ($\alpha_{Install}$) is determined using the obtained lane (170).

6. Method (550) for detecting a velocity of a vehicle (100), wherein the method comprises the following steps:

- ascertaining an installation angle ($\alpha_{Install}$) between the roadway (170) on which the vehicle (100) travels and the detection direction (122) of the measurement or radar sensor (105) according to a method (500) of the preceding claims; and
- detecting (560) a velocity of the vehicle (100) using the ascertained installation angle ($\alpha_{Install}$).

7. Device (110) having apparatuses (135, 140, 145, 150) comprising a detection apparatus of a measurement or radar sensor, which is designed to carry out, implement and/or actuate the steps of a method (500, 550) according to any of the preceding claims.

8. Computer program having program code, which is designed to carry out and/or implement the steps of the method (500, 550) according to any of claims 1 to 5 in a device according to claim 7.

9. Machine-readable storage medium on which the computer program according to claim 8 is stored.

**Revendications**

1. Procédé (500) de détermination d'un angle d'installation ($\alpha_{Install}$) entre une chaussée (170), sur laquelle un véhicule (100) se déplace, et un dispositif de détection (122) d'un capteur de mesure ou radar (105), dans lequel le procédé (500) présente les étapes suivantes :

   - lecture (510) d'une pluralité de signaux de réflexion (125), représentant chacun un signal de réflexion (125), qui a été réfléchi par un faisceau de mesure ou radar (120) émis par une unité émettrice (115) du capteur de mesure ou radar (105) et sur une section de réflexion (130) respective différente du véhicule (100), dans lequel les signaux de réflexion (125) contiennent une information de mouvement concernant une direction de mouvement de la section de réflexion (130) du véhicule (100), sur laquelle le faisceau de mesure ou radar (120) a été réfléchi, dans lequel les signaux de réflexion (125) contiennent une information de position, qui représente la position (420) de la section de réflexion (130) du véhicule (100), que laquelle le faisceau de mesure ou radar (120) a été réfléchi ;
   - détection (520) d'une composante de direction de mouvement ($v_0$) des directions de mouvement des sections de réflexion (130) du véhicule (100) représentées par les informations de mouvement à partir de la pluralité de signaux de réflexion (125), dans lequel, en raison des différents angles d'observation des sections de réflexion, les vitesses radiales mesurées sont différentes et, en supposant que toutes les sections de réflexion du véhicule avancent à la même vitesse et dans la même direction, une direction de mouvement commune est déterminée à partir de là comme composante de direction de mouvement ; et
   - détermination (530) de l'angle d'installation ($\alpha_{Install}$) à l'aide de la composante de direction de mouvement ($v_0$) détectée.

2. Procédé (500) selon la revendication 1, dans lequel dans l'étape de détection (520) la composante de direction de mouvement ($v_0$) est détectée à l'aide d'un procédé de résolution pour un système d'équations surdéterminé et/ou une transformation de Hough.

3. Procédé (500) selon l'une des revendications précédentes, dans lequel dans l'étape de détection (520) les directions de mouvement des sections de réflexion (130) représentées par les informations de mouvement sont traitées ou interprétées comme des vecteurs de vitesse radiale ($v_r$) des sections de réflexion (130) du véhicule (100), afin de détecter la composante de direction de mouvement ($v_0$).

4. Procédé (500) selon l'une des revendications précédents, dans lequel en outre une étape de suivi du véhicule (100) est effectuée, en particulier dans lequel l'angle d'installation ($\alpha_{Install}$) est en outre déterminé de manière itérative à l'aide d'une information concernant le véhicule suivi (100).

5. Procédé (500) selon l'une des revendications précédentes, dans lequel en outre une étape de détection statistique de la probabilité d'occurrence des positions des sections de réflexion (130) est effectuée, afin d'obtenir la trajectoire (170) du véhicule (100), dans lequel l'angle d'installation ($\alpha_{Install}$) est déterminé à l'aide de la trajectoire obtenue (170).

6. Procédé (550) de détection d'une vitesse d'un véhicule (100), dans lequel le procédé présente les étapes suivantes :

   - détermination d'un angle d'installation ($\alpha_{Install}$) entre la chaussée (170), sur laquelle le véhicule (100) se déplace, et le dispositif de détection (122) du capteur de mesure ou radar (105) selon un procédé (500) des revendications suivantes : et

- détection (560) d'une vitesse du véhicule (100) à l'aide de l'angle d'installation déterminé ($\alpha_{Install}$).

7. Dispositif (110) comportant des appareils (135, 140, 145, 150) comprenant un dispositif de détection d'un capteur de mesure ou radar, qui est conçu pour réaliser, mettre en oeuvre et/ou commander les étapes d'un procédé (500, 550) selon l'une des revendications précédentes.

8. Programme informatique comportant un code de programme, qui est conçu pour commander, réaliser et/ou mettre en oeuvre les étapes du procédé (500, 550) selon l'une des revendications 1 à 5 dans un dispositif selon la revendication 7.

9. Support de stockage lisible par machine, sur lequel un programme informatique selon la revendication 8 est stocké.

# Fig. 1

EP 3 714 286 B1

Fig. 2

# Fig. 3

EP 3 714 286 B1

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2607922 A1
- DE 102014003152 A1

- EP 2660624 A1